# EUROPEAN PATENT APPLICATION

(11) **EP 4 721 551 A1**
(43) Date of publication of application: **08.04.2026**
(21) Application number: 24204391.7
(22) Date of filing: 02.10.2024
(51) Int. Cl.: A01D 61/00, A01D 41/14

(54) **A HEADER FOR AN AGRICULTURAL HARVESTER**

(71) Applicant: CNH Industrial Polska Sp. z o.o., 09-407 Plock (PL)
(72) Inventor: Adamczyk, Dariusz, 09-407 Plock (PL)
(74) Representative: CNH Industrial IP Department

(57) **Abstract**

The header (3) comprises a header frame including a header floor (23) and two upstanding sidewalls (20), and further comprising a crop transporting auger (5) arranged between said sidewalls and above said floor. The header is characterized in that the auger (5) is rotatable relative to at least one adjustable side plate (34) configured to be able to undergo a linear translational movement for adjusting the distance between the auger (5) and the header floor (23), wherein said adjustable side plate is coupled to a sidewall (20) of the frame by a mechanism which enables said translational movement by a rotation actuated manually or mechanically. The invention is advantageous in that the auger adjustment is a translational movement rather than a pivoting motion, which makes it easier to adjust the auger without interfering with other machine elements. At the same time, the adjustment can be actuated easily, by a manually or mechanically applied rotation.

## Description

### Field of the invention

The present invention is related to agricultural machinery, in particular to a header for a combine or forage harvester.

### State of the art.

Combine or forage harvesters are provided with a wide header attached to the front of the harvester and comprising cutting knives for cutting crops from the field. Cut crops fall onto the header floor and are transported to a central area of the header. This can be done by a draper belt, but in many header designs, a rotating auger is used, having a central tube provided with oppositely oriented helicoidal auger blades for transporting the crops through the rotation of said blades towards the central area.

It may be required to adjust the position of the auger to the type of crop and the harvesting conditions and it is known to provide mechanisms for adjusting the auger position, in particular the distance between the auger and the header floor. Often such mechanisms require time-consuming manipulations by the operator to make sure that the auger adjustment is the same across the full length of the auger.

Patent publication document EP4245118 describes a system wherein the auger is rotatable relative to two side plates which are adjustable by pivoting the side plates about the rotation axis of a drive sprocket arranged to drive the auger's rotation. It was found however that the adjustment of the side plates by a pivoting movement increased the risk of interference between the auger and the feeder. An improved solution for the auger adjustment is therefore desirable.

### Summary of the invention

The invention is related to a header in accordance with the appended claims. The header comprises a header frame including a header floor and two upstanding sidewalls, and further comprising a crop transporting auger arranged between said sidewalls and above said floor. The header is characterized in that the auger is rotatable relative to at least one adjustable side plate configured to be able to undergo a linear translational movement for adjusting the distance between the auger and the header floor, wherein said adjustable side plate is coupled to a sidewall of the frame by a mechanism which enables said translational movement by a rotation actuated manually or mechanically. The invention is advantageous in that the auger adjustment is a translational movement rather than a pivoting motion, which makes it easier to adjust the auger without interfering with other machine elements. At the same time, the adjustment can be actuated easily, by a manually or mechanically applied pivoting movement. One embodiment includes a disc that is pivotable about an eccentric pivot point and that comprises a curved groove, with a pin connected to the adjustable plate confined within said groove.

### Brief description of the figures

Figure 1 is a conceptual side view of a combine harvester as known in the prior art.
Figure 2 shows a typical combine header.
Figure 3 is a side view of a header according to an embodiment of the invention, with the auger in the low position.
Figure 4 is a side view of the header of Figure 3, with the auger in the high position.
Figures 5a and 5b show details of the mechanism for moving the auger between the low and high positions, in the embodiment illustrated in Figures 3 and 4.
Figure 6 is an image of the eccentric disc as applicable in a preferred embodiment of the invention.

### Detailed description of preferred embodiments of the invention

Preferred embodiments will now be described with reference to the drawings. The detailed description is not limiting the scope of the invention, which is defined only by the appended claims.

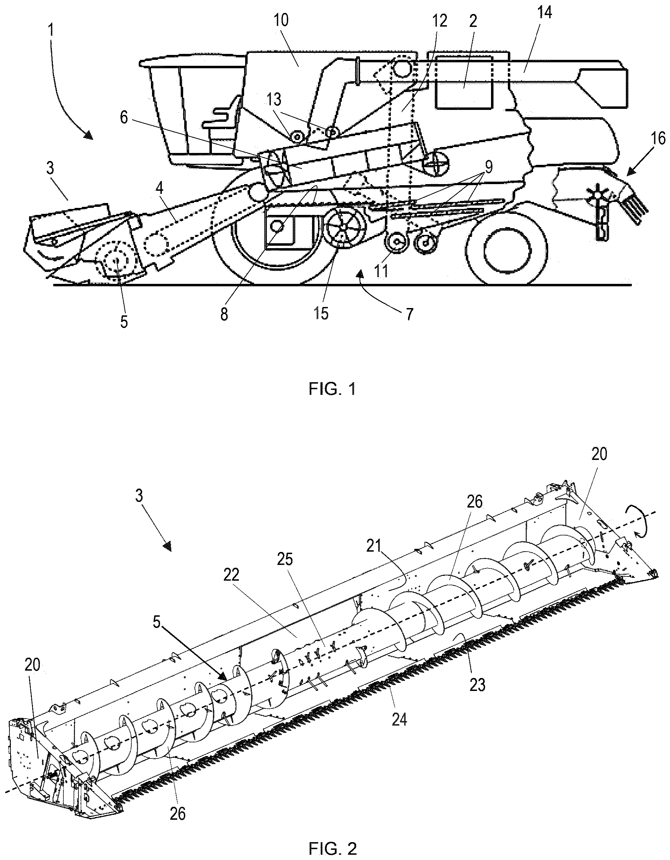

With reference to Figure 1, a combine harvester 1 as presently known in the art includes an engine 2, a header 3 for cutting crops from the field, and for gathering the crops towards the inlet of a feeder 4. The header 3 comprises an auger 5 for moving cut crops to a central area of the header from where the crops are supplied to the feeder 4. The feeder 4 delivers the crops to one or two threshing rotors 6 which separate larger plant material from grains and smaller residue.

The cleaning section 7 of the harvester includes a sieve assembly comprising a grain pan 8 and a plurality of sieves 9 for separating grains from the smaller residue. Fully separated grains are collected in a grain tank 10 through the combined action of a clean grain auger 11 and a grain elevator 12. From the tank 10, the grains may be evacuated from the harvester through further augers 13 at the bottom of the grain tank and through a pivotable spout 14. Small plant residue, also referred to as chaff, is blown towards the rear of the harvester by a blower 15. Larger plant residue such as plant stalks and leaves is moved to a chopper and spreader assembly 16, where it may be cut into smaller particles and spread out across a wide swath behind the advancing combine.

Figure 2 shows a 3D view of a typical combine header 3. The header 3 comprises a header frame formed of a pair of sidewalls 20 and a back wall 21. The back wall 21 includes an entry port 22 towards the feeder of the combine harvester. A header floor 23 is mounted between the sidewalls 20, with a cutterbar 24 located at the front of the header floor 23. The auger 5 comprises a cylindrical tube 25 extending essentially along the full width of the header and provided with two oppositely wound helicoidal flights 26 on either side of a central area. When the auger 5 rotates in the direction indicated by the arrow, the helicoidal flights push the crops towards the centre.

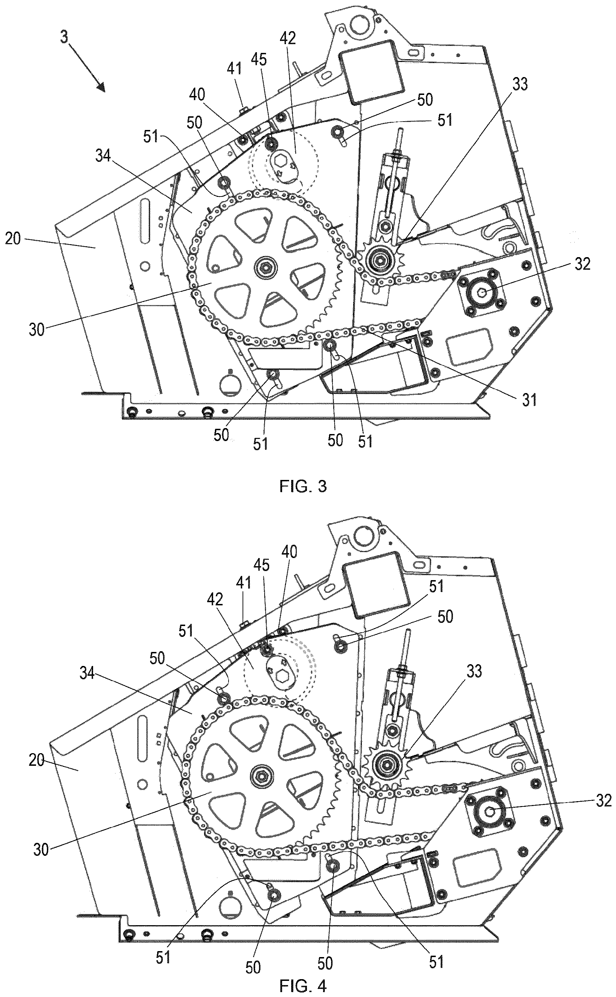

Figure 3 shows a side view of the right-hand side of a header 3 in accordance with an embodiment of the invention. The header includes a large sprocket wheel 30 driven by a smaller sprocket wheel (hidden) through a chain drive 31. The large sprocket wheel 30 is coupled to the axle of the auger 5, while the axle 32 of the small sprocket wheel is driven by a suitable power source which may be an electric or hydraulic motor, or a coupling to a PTO (power take-off) shaft of the harvester. A tensioner sprocket wheel 33 is included, for maintaining a suitable tension on the chain 31 so as to ensure a correct power transfer from the drive sprocket wheel to the large driven sprocket wheel 30.

The large sprocket wheel 30 is rotatably coupled to an adjustable side plate 34 attached to the sidewall 20 of the header frame by an adjustment mechanism. The mechanism enables moving the plate 34 and thereby the auger 5 from a low position to a high position relative to the header floor along a linear translational trajectory. The image in Figure 3 shows the auger in the low position (i.e. closest to the header floor), while the image in Figure 4 shows the auger in the high position.

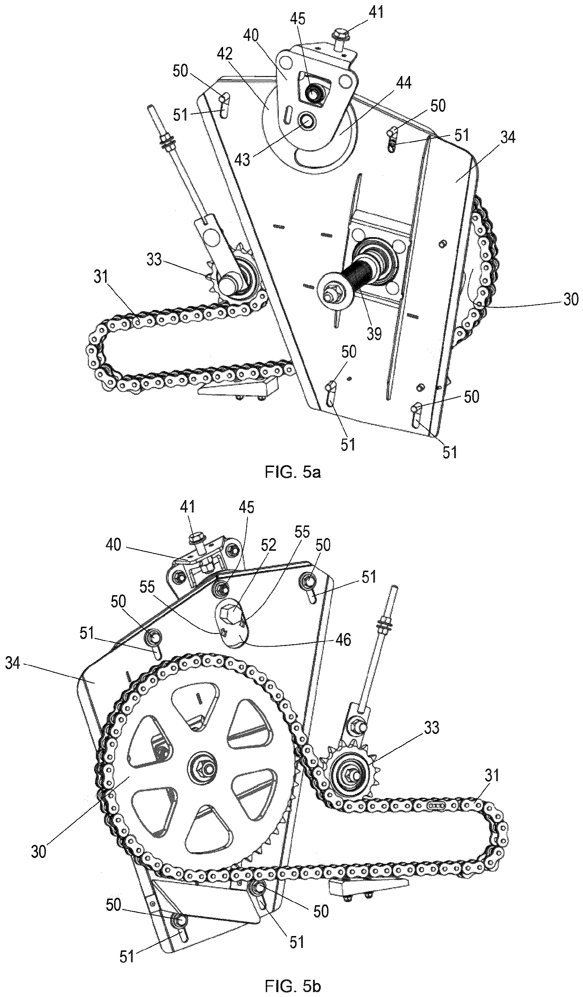

Figures 5a and 5b illustrate the mechanism without showing the header frame, so that the main components are better visible. The chain drive is shown, including the chain 31, the large sprocket wheel 30 and the auger axle 39 attached to it. An auxiliary bracket 40 is fixed to the upper edge of the frame's sidewall 20. The position of the bracket 40 is set in the factory by a setting bolt 41. A circular disc 42 is pivotable relative to the bracket 40, about a pivot pin 43 that is at an eccentric position of the disc 42. The disc is provided with a half-circular groove 44 and a pin 45 attached to the adjustable side plate 34 is confined within said groove. Preferably, the pin 45 is provided with a roller bearing which facilitates a rolling movement of the pin 45 within the groove 44. The disc 42 is mounted on the inner side of the adjustable plate 34, but it is accessible from the outer side through an opening 46 in said adjustable plate 34. The disc 42 is shown in dotted lines in Figures 3 and 4. The images in Figures 5a and 5b correspond to the low position of the adjustable plate 34, as shown also in Figure 3.

During normal operation of the harvester, the adjustable plate 34 is fixed to the sidewall 20 of the frame by a number of bolt connections 50. It is seen however that the bolts 50 are inserted in straight grooves 51 through the adjustable plate 34. When the bolts 50 are loosened therefore, it becomes possible (when the combine is not operational, i.e. the auger is not rotating) to adjust the plate's position by moving the plate by a linear translational movement, actuated by rotating the disc 42 about the pivot point 43. In the embodiment shown, this is enabled by a hexagonal head 52 fixed to the disc and accessible through the opening 46 in the adjustable plate 34. The hexagonal head 52 can be accessed by a wrench, enabling to turn the disc 42 one half turn, thereby forcing the pin 45 to roll to the other end of the groove 44, thereby lifting up the adjustable plate 34 due to the fact that the pivot point 43 of the disc 42 is eccentrically placed. During the lifting up the plate 34, the plate is guided by the loosened bolts 50 sliding downward relative to the respective grooves 51. When the plate is in the high position, the bolts 50 are fixed again, fixing the adjustable plate 34 to the frame wall 20, and the auger 5 is ready to operate in the high position, as illustrated in Figure 4.

According to some embodiments, the turning of the disc 42 can be done manually with a suitable wrench large enough to realize the necessary force transfer for lifting up the auger 5.

According to other embodiments however, a mechanical actuator is provided for turning the disc 42. This may be an electrically or hydraulically driven actuator which can be activated from the operator's cabin.

In the embodiment shown, two arrows 55 provide a visual indication of the auger position : when the arrows are pointing downward, the auger is in the low position, while when the arrows are pointing upward, the auger is in the high position. This is helpful for the operator since the current position may not always be immediately apparent due to crop being present between the auger 5 and the header floor 23.

The same mechanism including an adjustable plate 34 and an eccentric disc 42 is preferably present also on the other side of the auger. On that side, it is possible that no sprocket wheels are present, if the auger is actuated from one side only. It is also not excluded that the mechanism including an eccentric disc and adjustable plate is present on one side of the header and that another lifting mechanism is present on the opposite side of the header.

When the mechanism is present on the side comprising the sprocket wheels and chain drive, it may be required to adjust the tensioning force of the tensioning sprocket 33 when the height of the auger has been adjusted in the above-described way.

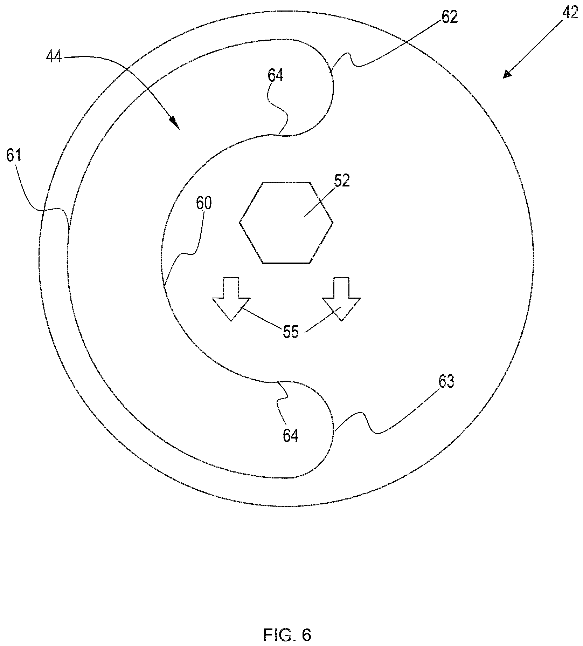

A number of features of the eccentric disc 42 are characteristic to the illustrated embodiment and advantageous compared to similar systems existing in the prior art. Figure 6 shows a separate image of the disc 42, including the hexagonal head 52 and the arrows 55. The half-circular groove 44 has a closed circumference, i.e. it comprises an inner curved track 60 and an outer curved track 61, and a first and second end portion 62,63. As seen in Figures 3 and 4, the pin 45 becomes lodged in the first end portion 62 when the adjustable plate 34 is in the low position, and in the second end portion 63 when the adjustable plate 34 is in the high position. This configuration ensures that the pin 45 is always forced to move up or down when the disc 42 is rotated, as compared to similar discs provided only with an inner track for example. Having said this, the use of such other types of discs is not excluded from the invention scope. In a disc having only an inner track, said inner track is an example of the more generic feature of a cam surface that interacts with the pin 45 on the adjustable plate 34, for moving said plate up or down between the high and low positions.

Another advantageous detail of the particular disc 42 applied in the illustrated embodiment is related to the transition from the inner track 60 to the end portions 62,63. These transitions are formed by slight depressions 64 towards the centre of the disc. These depressions 64 hold the pin 45 in the respective low and high position when the disc is in a fixed position. The depressions 64 are however not sufficiently deep to prevent the deliberate pivoting of the disc 42 for lifting or lowering the adjustable plate 34.

According to further embodiments, one or more sensors are included for sensing the position of the auger 5 relative to the header floor 23. This could be a position sensor of a known type. For example a proximity sensor could be integrated in the adjustable plate 34, in the vicinity of one of the grooves 51, for sensing the position of the bolt connection 50 within said groove.

The invention is not limited to the mechanism comprising the eccentric disc 42 , but includes any mechanism that enables lifting or lowering the auger by a translational linear movement actuated by a rotation. For example, the disc 42 could be omitted and the adjustable plate 34 could be coupled to the sidewall 20 by a lever mechanism that enables lifting or lowering the plate 34 by turning a lever (after loosening the bolt connections 50).

## Claims

1. A header (3) for an agricultural harvester, comprising a header frame including a header floor (23) and two upstanding sidewalls (20), and further comprising a crop transporting auger (5) arranged between said sidewalls and above said floor, **characterized in that** the auger is rotatable relative to at least one adjustable side plate (34) configured to be able to undergo a linear translational movement for adjusting the distance between the auger (5) and the header floor (23), wherein said adjustable side plate is coupled to a sidewall (20) of the frame by a mechanism which enables said translational movement by a rotation actuated manually or mechanically.

2. The header (3) according to claim 1 wherein said mechanism includes a pivotable disc (42) configured to pivot relative to the frame about an excentric pivot point (43), wherein the disc is further provided with a cam surface (60) and wherein the adjustable side plate (34) comprises a pin (45) configured to interact with said cam surface (60), so that rotating the disc one half-turn results in lifting up or lowering the side plate (34) between a low position and a high position when the adjustable side plate (34) is not fixed to the sidewall (20) by any other fixation means, and wherein the disc (42) comprises an access feature (52) that enables accessing and rotating the disc.

3. The header (3) according to claim 2, wherein said access feature is a polygonal head (52) that enables rotating the disc manually by a gripping tool such as a wrench.

4. The header (3) according to claim 2 or 3, wherein the disc (42) comprises indicators (55) which indicate whether the adjustable plate (34) is in the low position or the high position.

5. The header (3) according to any one of claims 2 to 4, wherein the pin (45) confined within said half-circular groove (44) is provided with a roller bearing that facilitates a rolling movement of the pin (45) within said groove (44).

6. The header (3) according to any one of claims 2 to 5, wherein said cam surface is part of a groove (44) formed through the eccentric disc (42) wherein said pin (45) is confined in said groove (44), the groove having a closed circumference, consisting of a curved inner track (60), a curved outer track (61) and a first and second end portion (62,63) for lodging said pin (45) in said first or second end portion when the adjustable side plate (34) is in the low or the high position respectively.

7. The header (3) according to claim 6, wherein depressions (64) towards the centre of the disc (42) are formed at the transitions between the inner track (60) and the first and second end portions (62,63), said depressions (64) being configured to hold said pin (45) in the first and second end portions (62,63) when the adjustable side plate (34) is in the low or high position respectively, without however preventing the active rotation of the disc (42) for lowering or lifting the adjustable side plate (34).

8. The header (3) according to any one of the preceding claims, wherein the adjustable side plate (34) is fixable to the sidewall (20) by a plurality of bolt connections (50) inserted through linear grooves (51) in the side plate (34), so that said upward or downward adjustment is possible only after loosening the bolt connections (50) and wherein the linear translational movement is guided by the bolt connections (50) gliding within said respective grooves (51).

9. The header (3) according to any one of the preceding claims, wherein said adjustable plate (34) and said mechanism is present on both sides of the header frame.

10. **An** agricultural harvester comprising a header (3) according to any one of the preceding claims.
